(19) Europäisches Patentamt
European Patent Office
Office européen des brevets

(11) EP 2 463 943 A1

(12) **EUROPEAN PATENT APPLICATION**
published in accordance with Art. 153(4) EPC

(43) Date of publication:
**13.06.2012 Bulletin 2012/24**

(21) Application number: **10806562.4**

(22) Date of filing: **06.08.2010**

(51) Int Cl.:
***H01M 4/62*** (2006.01) ***H01G 9/058*** (2006.01)

(86) International application number:
**PCT/JP2010/063420**

(87) International publication number:
**WO 2011/016563 (10.02.2011 Gazette 2011/06)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **07.08.2009 JP 2009184939**

(71) Applicant: **JSR Corporation**
**Tokyo 105-8640 (JP)**

(72) Inventors:
- **MOGI, Takeshi**
**Tokyo 105-8640 (JP)**
- **HONDA, Tatsuaki**
**Tokyo 105-8640 (JP)**
- **TEZUKA, Teruaki**
**Tokyo 105-8640 (JP)**

(74) Representative: **TBK**
**Bavariaring 4-6**
**80336 München (DE)**

# (54) ELECTROCHEMICAL DEVICE AND BINDER COMPOSITION

(57) An electrochemical device superior in charge-discharge properties such as low-temperature property, having a positive electrode and a negative electrode, wherein at least either of the positive electrode and the negative electrode has a current collector and an electrode layer, the electrode layer has an electrode active material and a binder, the binder contains, as a component, a polymer having a constituent unit derived from an amide group-containing monomer and a constituent unit derived from (meth)acrylic acid, and the polymer (A) satisfies the following condition (1) or (2).
(1) The polymer (A) has a swelling rate of 120 to 600% when immersed, for 24 hours, in a solution (i) of 80°C containing ethylene carbonate, diethyl carbonate, ethyl methyl carbonate and lithium hexafluorophosphate.
(2) The polymer (A) has a swelling rate of 110 to 300% when immersed, for 24 hours, in a solution (ii) of 80°C containing propylene carbonate and methyl triethyl ammonium tetrafluoroborate.

EP 2 463 943 A1

## Description

TECHNICAL FIELD

The present invention relates to an electrochemical device and a binder composition. More particularly, the present invention relates to an electrochemical device superior in charge-discharge property and a binder composition.

BACKGROUND ART

In recent years, electronic appliances have become strikingly small and light. In connection therewith, a smaller size and a higher energy density have come to be required also for the electrochemical devices (e.g. secondary battery and capacitor) used as an electric source for driving of electrochemical appliance. As specific examples of the electrochemical device (battery) satisfying such an requirement, there have been developed recently nickel-hydrogen secondary battery, lithium ion secondary battery, electric double layer capacitor and lithium ion capacitor.

Lithium ion secondary battery is constituted by a positive electrode composed mainly of a lithium-containing transition metal oxide, a negative electrode composed mainly of a carbon material capable of occluding and releasing lithium ion, and an organic electrolytic solution containing a lithium salt. In charging of lithium ion secondary battery, lithium ion is released from the positive electrode and occluded by the carbon material of the negative electrode and, in discharging of lithium ion secondary battery, lithium ion is released from the negative electrode and occluded by the metal oxide of the positive electrode.

Electric double layer capacitor is generally divided, depending upon the kind of the electrolytic solution used, into an aqueous electrolytic solution type using an inorganic (e.g. sulfuric acid or potassium hydroxide) aqueous electrolytic solution and a non-aqueous electrolytic solution type using, as a solvent, a water-free organic electrolytic solution (e.g. propylene carbonate or acetonitrile) and, as an electrolyte, tetraethylammonium tetrafluoroborate ($Et_4NBF_4$) or the like.

These electrochemical devices are necessarily required to have a long life and a high capacity. Therefore, studies are under way for electrochemical device of long life and high capacity. Recently, there has become necessary, besides the long life and high capacity, improvement in charge-discharge property such as low-temperature property, high-rate property (hereinafter referred to as "rate property" in some cases) or the like.

For improvement in charge-discharge property, a number of studies have been made on the improvement of the electrode which is a constituent of electrochemical device. Here, the electrode has a current collector and an electrode layer provided at one side of the current collector. For production of the electrode, the following method is known, for example. First, there is prepared a paste or slurry which is an aqueous dispersion of an active material (e.g. hydrogen-occluding alloy, graphite, metal oxide or active carbon), a thickening agent (e.g. carboxymethyl cellulose) and a binder (a polymer particles-containing latex); the paste or slurry is coated on a current collector and dried; the resulting film is pressed to form an electrode layer on the current collector; thereby, an electrode is produced.

The above-mentioned binder has functions such as bonding of powders of the active material each other, improving high adhesivity between the electrode layer and the current collector, and the like. Improvement of binder is under way for improved properties of electrochemical device. As specific examples of the binder, there is known one obtained by emulsion-polymerizing a monomers composition containing a conjugated diene, an aromatic vinyl compound, a (meth)acrylate compound and an unsaturated carboxylic acid (see, for example, Patent Document 1).

PRIOR ART DOCUMENT

Patent Document

Patent Document 1: JP-A-1999-25989

SUMMARY OF THE INVENTION

In an electrochemical device having an electrode using the binder composition described in the Patent Document 1, the current collection by electrode active material is ensured, the utilization efficiency thereof is high and the influence on electrode active material is small; therefore, a long life and a high capacity are achievable. However, in the electrochemical device, there still remain rooms for further improvement in charge-discharge property [specifically, low-temperature property and high-rate property in secondary battery and, in capacitor, capacitor cycle property (hereinafter, referred to simply as "cycle property" in some cases)]. Thus, it has been desired to develop an electrochemical device

superior in charge-discharge property.

The present invention has been made in order to solve the above-mentioned problems of the prior art and aims at providing an electrochemical device superior in charge-discharge property (specifically, superior in low-temperature property and high-rate property in secondary battery and in cycle property in capacitor).

The present invention provides the following electrochemical device and binder composition.

[1] An electrochemical device (first electrochemical device) having a positive electrode and a negative electrode forming a pair with the positive electrode, wherein at least either of the positive electrode and the negative electrode has a sheet-like current collector and an electrode layer provided at least at one side of the current collector, the electrode layer has an electrode active material and a binder which bonds and fixes powders of the electrode active material each other and further the electrode active material and the current collector, and the binder contains, as a component, a polymer (A) having a constituent unit (a1) derived from an amide group-containing monomer (hereinafter, this constituent unit is referred to as "constituent unit (a1)", in some cases) and a constituent unit (a2) derived from (meth)acrylic acid (hereinafter, this constituent unit is referred to as "constituent unit (a2), in some cases) (hereinafter, the polymer is referred to as "polymer (A)" in some cases), the polymer (A) satisfying the following condition (1) or (2). (1) The polymer (A) has a swelling rate of 120 to 60.0% when immersed, for 24 hours at 80°C, in a solution (i) obtained by dissolving lithium hexafluorophosphate at a concentration of 1 mol/liter in a solvent consisting of ethylene carbonate, diethyl carbonate and ethyl methyl carbonate (the volume fraction thereof is 1:1:1) (hereinafter, this solution (i) is referred to as "electrolytic solution A", in some cases) and controlled at 80°C. (2) The polymer (A) has a swelling rate of 110 to 300% when immersed, for 24 hours at 80°C, in a solution (ii) obtained by dissolving methyl triethyl ammonium tetrafluoroborate in propylene carbonate so that the concentration of methyl triethyl ammonium tetrafluoroborate becomes 1 mol/liter (hereinafter, this solution (ii) is referred to as "electrolytic solution (B)", in some cases) and controlled at 80°C.

[2] An electrochemical device according to [1], wherein the polymer (A) as a component of the binder contains the constituent unit (a1) derived from an amide group-containing monomer in an amount of 1 to 10 mass % relative to the total constituent units of the polymer (A).

[3] An electrochemical device according to [1] or [2], wherein the polymer (A) as a component of the binder contains the constituent unit (a2) derived from (meth)acrylic acid in an amount of 0.3 to 5 mass % relative to the total constituent units of the polymer (A).

[4] An electrochemical device (second electrochemical device) having a positive electrode and a negative electrode forming a pair with the positive electrode, wherein at least either of the positive electrode and the negative electrode has a sheet-like current collector and an electrode layer provided at least at one side of the current collector, the electrode layer has an electrode active material and a binder which bonds and fixes powders of the electrode active material each other and further the electrode active material and the current collector, and the binder contains, as a component, a polymer (A) containing a constituent unit (a1) derived from an amide group-containing monomer, in an amount of 1 to 10 mass % relative to the total constituent units of the polymer (A) and a constituent unit (a2) derived from (meth)acrylic acid in an amount of 0.3 to 5 mass % relative to the total constituent units of the polymer (A).

[5] An electrochemical device according to any of [1] to [4], wherein the constituent unit (a1) derived from an amide group-containing monomer is derived from a monomer represented by the following general formula (1).

[Formula 1]

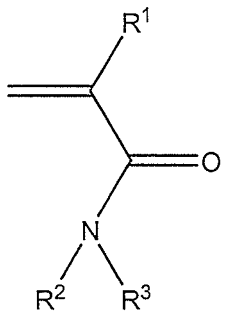

(1)

(In the general formula (1), $R^1$ is a hydrogen atom or a methyl group; and $R^2$ and $R^3$ are each independently a hydrogen atom or an unsubstituted or substituted hydrocarbon group of 1 to 10 carbon atoms.)

[6] An electrochemical device according to [5], wherein $R^1$ of the general formula (1) is a methyl group.

[7] An electrochemical device according to any of [1] to [6], wherein the polymer (A) as a component of the binder further contains a constituent unit (a3) derived from a conjugated diene, in an amount of 20 to 60 mass % relative

to the total constituent units of the polymer (A).

[8] An electrochemical device according to any of [1] to [7], wherein the polymer (A) as a component of the binder is obtained by polymerizing a polymer raw material containing an amide group-containing monomer and (meth) acrylic acid, in the presence of a chain transfer agent of 0.3 to 4 mass parts relative to the total amount (100 mass parts) of the polymer raw material.

[9] A binder composition (first binder composition) containing (A) a polymer having a constituent unit (a1) derived from an amide group-containing monomer and a constituent unit (a2) derived from (meth)acrylic acid, and (B) a dispersing medium, wherein the polymer (A) satisfies the following condition (1) or (2). (1) The polymer (A) has a swelling rate of 120 to 600% when immersed, for 24 hours at 80°C, in a solution (i) (i.e. "electrolytic solution A") obtained by dissolving lithium hexafluorophosphate at a concentration of 1 mol/liter in a solvent consisting of ethylene carbonate, diethyl carbonate and ethyl methyl carbonate (the volume fraction thereof is 1:1:1) and controlled at 80°C. (2) The polymer (A) has a swelling rate of 110 to 300% when immersed, for 24 hours at 80°C, in a solution (ii) (i.e. "electrolytic solution B") obtained by dissolving methyl triethyl ammonium tetrafluoroborate in propylene carbonate so that the concentration of methyl triethyl ammonium tetrafluoroborate becomes 1 mol/liter and controlled at 80°C.

[10] A binder composition according to [9], wherein the polymer (A) contains the constituent unit (a1) derived from an amide group-containing monomer in an amount of 1 to 10 mass % relative to the total constituent units of the polymer (A).

[11] A binder composition according to [9] or [10], wherein the polymer (A) contains the constituent unit (a2) derived from (meth)acrylic acid in an amount of 0.3 to 5 mass % relative to the total constituent units of the polymer (A).

[12] A binder composition (second binder composition) containing (A) a polymer containing a constituent unit (a1) derived from an amide group-containing monomer in an amount of 1 to 10 mass % relative to the total constituent units (100 mass %) of the polymer (A) and a constituent unit (a2) derived from (meth)acrylic acid in an amount of 0.3 to 5 mass % relative to the total constituent units (100 mass %) of the polymer (A), and (B) a dispersing medium.

The first electrochemical device of the present invention contains, as a component of the binder, a polymer (A) having a constituent unit (a1) derived from an amide group-containing monomer and a constituent unit (a2) derived from (meth)acrylic acid, wherein the polymer (A) satisfies the above-mentioned condition (1) or (2). Therefore, the device shows good diffusion of electrolyte ion in polymer network and superior charge-discharge property.

The second electrochemical device of the present invention contains, as a component of the binder, a polymer (A) having a constituent unit (a1) derived from an amide group-containing monomer, in a given amount and a constituent unit (a2) derived from (meth)acrylic acid, in a given amount. Therefore, the device shows good diffusion of electrolyte ion in polymer network and superior charge-discharge property.

The first binder composition of the present invention contains a polymer (A) satisfying the above-mentioned condition (1) or (2), that is, showing a given swelling rate to an electrolytic solution A or B. Therefore, the binder composition can be used as a material for the electrode constituting an electrochemical device superior in charge-discharge property.

The second binder composition of the present invention contains a polymer (A) containing a constituent unit (a1) derived form an amide group-containing monomer, in a given amount and a constituent unit (a2) derived from (meth) acrylic acid, in a given amount. Therefore, the binder composition can be used as a material for the electrode constituting an electrochemical device superior in charge-discharge property.

## MODE FOR CARRYING OUT THE INVENTION

The mode for carrying out the present invention is described below. However, the present invention is in no way restricted to the following embodiment. That is, it should be construed that the following embodiment can be subjected to appropriate change, improvement, etc. based on the knowledge possessed by those skilled in the art, as long as the gist of the present invention is not deviated and that even those embodiments after the change, improvement, etc. belong to the scope of the present invention.

### [1] Electrochemical device

The first electrochemical device of the present invention has a positive electrode and a negative electrode forming a pair with the positive electrode, wherein at least either of the positive electrode and the negative electrode has a sheet-like current collector and an electrode layer provided at least at one side of the current collector, the electrode layer has an electrode active material and a binder which bonds and fixes powders of the electrode active material each other and further the electrode active material and the current collector, and the binder contains, as a component, a polymer (A) having a constituent unit (a1) and a constituent unit (a2), the polymer (A) satisfying the above-mentioned condition (1) or (2). This electrochemical device contains, as a component of the binder, the polymer (A) satisfying the above-mentioned condition (1) or (2). Therefore, the electrochemical device shows good diffusion of electrolyte ion in polymer network and superior charge-discharge property.

As specific examples of the first electrochemical device of the present invention, there can be mentioned lithium ion secondary battery, electric double layer capacitor and lithium ion capacitor.

[1-1] Positive electrode and negative electrode

In the first electrochemical device of the present invention, at least either of the positive electrode and the negative electrode has a sheet-like current collector and an electrode layer provided at least at one side of the current collector, and the electrode layer satisfies the above-mentioned given requirements. By having such an electrode (positive electrode, negative electrode or both of them), a battery (electrochemical device) superior in charge-discharge property can be obtained. Incidentally, the first electrochemical device of the present invention may have a plurality of electrode groups each comprising a positive electrode and a negative electrode. That is, for example, when a positive electrode and a negative electrode are each formed in a strip and a separator is placed between the strip-shaped positive electrode and the strip-shaped negative electrode to form one electrode group, one electrochemical device may have a plurality of such electrode groups.

[1-1-1] Current collector

The material constituting the current collector may be appropriately selected from metal materials such as aluminum, copper, nickel, tantalum, stainless steel, titanium and the like, depending upon the kind of intended electrochemical device.
The thickness of the current collector is preferably 5 to 30 μm, more preferably 8 to 25 μm when the current collector is, for example, for the electrode of lithium secondary battery. When the current collector is, for example, for the electrode of capacitor, the thickness of the current collector is preferably 5 to 100 μm, more preferably 10 to 70 μm, particularly preferably 15 to 30 μm.

[1-1-2] Electrode layer

As described previously, the electrode layer is provided at least at one side of the current collector and has an electrode active material and a binder bonding and fixing powders of the electrode active material each other and the electrode active material and the current collector.

[1-1-2-1] Electrode active material

The electrode active material is preferably a powder material having a particle diameter of 3 to 400 μm. As the electrode active material, a hydrogen-occluding alloy powder is preferably used in aqueous battery, for example, nickel-hydrogen battery. Specifically explaining, there is preferably used a powder obtained by substituting, in $MmNi_5$ (a base), part of Ni with an element such as Mn, Al, Co or the like. Incidentally, "Mm" indicates misch metal which is a mixture of rare earth elements. In a non-aqueous battery, there can be mentioned, as the positive electrode material, for example, inorganic compounds such as lithium cobaltate, lithium nickelate, lithium manganate, iron lithium phosphate, ternary nickel cobalt lithium manganate, $MnO_2$, $MoO_3$, $V_2O_5$, $V_6O_{13}$, $Fe_2O_3$, $Fe_3O_4$, $Li_{(1-x)}CoO_2$, $Li_{(i-x)}\cdot NiO_2$, $LI_xCo_ySn_zO_2$, $Li_{(1-x)}Co_{(1-y)}Ni_yO_2$, $TiS_2$, $TiS_3$, $MoS_3$, $FeS_2$, $CuF_2$, $NiF_2$, and the like; carbon materials such as carbon fluoride, graphite, gas phase-grown carbon fiber and/or ground material thereof, PAN-based carbon fiber and/or ground material thereof, pitch-based carbon fiber and/or ground material thereof, and the like; and conductive polymers such as polyacetylene, poly-p-phenylene, and the like.
As the negative electrode material, there can be preferably mentioned, for example, carbon materials such as carbon fluoride, graphite, gas phase-grown carbon fiber and/or ground material thereof, PAN-based carbon fiber and/or ground material thereof, pitch-based carbon fiber and/or ground material thereof, and the like; conductive polymers such as polyacetylene, poly-p-phenylene, and the like; and amorphous compounds comprising a tin oxide or a fluorine compound. When there is used, in particular, a graphite type material such as natural graphite of high graphitization degree, artificial graphite, graphitized mesophase carbon or the like, there can be obtained a battery of good charge-discharge property and high capacity. When a carbonaceous material is used as the negative electrode material, the average particle diameter of the carbonaceous material is preferably 0.1 to 50 μm, more preferably 1 to 45 μm, particularly preferably 3 to 40 μm. When the average particle diameter is in the above range, advantageously, there hardly occur problems such as reduction in current efficiency, reduction in paste stability, and increase in resistance between particles in the coated film on electrode.
In capacitor, there can also be used active carbon or a polyacetylene-based organic semiconductor, besides the above-shown active materials shown in the non-aqueous battery.

[1-1-2-2] Binder

The binder contains, as a component, a polymer (A) having a constituent unit (a1) and a constituent unit (a2), wherein the polymer (A) satisfies the above-mentioned condition (1) or (2).

In the first electrochemical device of the present invention, the polymer (A) satisfies the condition (1) or (2), that is, the polymer (A) has a given swelling rate to the electrolytic solution A or the electrolytic solution B. Therefore, the device is superior in charge-discharge property. Thus, the binder contains a polymer having a constituent unit (a1) and a constituent unit (a2) and the polymer has a given swelling rate to the electrolytic solution A or the electrolytic solution B; as a result, it is considered that the diffusion of electrolyte ion (lithium ion in lithium secondary battery) in the polymer network of binder composition is good, resulting in higher conductivity and higher charge-discharge property.

[1-1-2-2-1] Polymer (A)

The polymer (A) has a constituent unit (a1) and a constituent unit (a2), as described above. By allowing the electrode layer to contain this polymer (A) (i.e. using the polymer (A) as a constituent of binder), an electrochemical device superior in charge-discharge property can be obtained.

[1-1-2-2-1a] Constituent unit (a1)

By allowing the binder to contain a polymer (A) having a constituent unit (a1) derived from an amide group-containing monomer, there are an improvement in affinity to electrolytic solution and an improvement in adhesivity between electrode layer and current collector. This is considered to cause an improvement in charge-discharge property of electrochemical device.

As to the constituent unit (a1), there is no particular restriction as long as the unit is derived from an amide group-containing monomer. When an amide group is present at the outer side of the polymer (A), the diffusion of electrolyte ion (lithium ion in lithium secondary battery) in polymer network is better; therefore, there is preferred a constituent unit derived from a monomer having an amide group at the side chain. As such a constituent, there can be mentioned, for example, a constituent unit derived from a monomer represented by the following general formula (1) and a constituent unit derived from a monomer represented by the following general formula (2). Of these, preferred is a constituent unit derived from a monomer represented by the following general formula (1) because an electrochemical device even superior in charge-discharge property can be obtained.

[Formula 2]

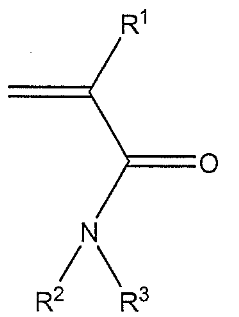

(1)

(In the formula (1), $R^1$ is a hydrogen atom or a methyl group; and $R^2$ and $R^3$ are each independently a hydrogen atom or a substituted or unsubstituted hydrocarbon group of 1 to 10 carbon atoms.)

[Formula 3]

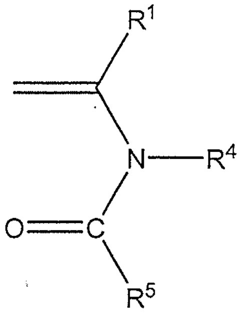

(2)

(In the formula (2), $R^1$ is a hydrogen atom or a methyl group; $R^4$ is a hydrogen atom or a substituted or unsubstituted hydrocarbon group of 1 to 10 carbon atoms; and $R^5$ is a substituted or unsubstituted hydrocarbon group of 1 to 20 carbon atoms.)

In the general formula (1), $R^1$ is preferably a methyl group because it enables production of an electrochemical device even superior in charge-discharge property.

As the hydrocarbon group as $R^2$ or $R^3$ of the general formula (1), there can be mentioned an aliphatic hydrocarbon group (e.g. straight chain hydrocarbon group, branched chain hydrocarbon group or cyclic hydrocarbon group), an aromatic hydrocarbon group having 1 to 10 carbon atoms and the like. As the substituent of the hydrocarbon group of 1 to 10 carbon atoms as $R^2$ and $R^3$, there can be mentioned hydroxyl group, amino group, carboxyl group, etc. Incidentally, as each of $R^2$ and $R^3$, preferred is a hydrogen atom or an unsubstituted hydrocarbon group, independently.

As the hydrocarbon group as $R^4$ of the general formula (2), there can be mentioned an aliphatic hydrocarbon group (e.g. straight chain hydrocarbon group, branched chain hydrocarbon group or cyclic hydrocarbon group), an aromatic hydrocarbon group having 1 to 10 carbon atoms and the like. As the substituent of the hydrocarbon group of 1 to 10 carbon atoms as $R^4$, there can be mentioned hydroxyl group, amino group, carboxyl group and the like, as in the case of $R^2$ or $R^3$

As specific examples of $R^2$ to $R^4$, there can be mentioned hydrogen atom, methyl group, ethyl group, isopropyl group, butyl group, octyl group, hydroxymethyl group, 2-hydroxyethyl group, 2-hydroxypropyl group, 3-hydroxypropyl group, carboxymethyl group, aminomethyl group, and 2-aminoethyl group.

As the hydrocarbon group as $R^5$ of the general formula (2), there can be mentioned an aliphatic hydrocarbon group (e.g. straight chain hydrocarbon group, branched chain hydrocarbon group or cyclic hydrocarbon group), an aromatic hydrocarbon group having 1 to 20 carbon atoms and the like. As the substituent of the hydrocarbon group of 1 to 20 carbon atoms as $R^5$. there can be mentioned hydroxyl group, amino group, carboxyl group and the like, as in the case of $R^2$ or $R^3$

The proportion of the constituent unit (a1) is preferably 1 to 10 mass %, more preferably 2 to 8 mass %, particularly preferably 2 to 5 mass %, relative to the total constituent units of the polymer (A). The proportion of the constituent unit (a1) in the above range is preferred because the electrochemical device obtained can exhibit sufficient charge-discharge property and a slurry for electrode, of high coatability can be obtained.

[1-1-2-2-1b] Constituent unit (a2)

The polymer (A) contains a constituent unit (a2) derived from (meth)acrylic acid, besides the constituent unit (a1) derived from an amide group-containing monomer. The polymer (A), when containing a constituent unit (a2) which has a carboxyl group, is considered to have high dispersing ability for electrode active material. (Meth)acrylic acid (acrylic acid and/or methacrylic acid) shows high copolymerizability with other monomer. Accordingly, when, in synthesis of polymer (A), there is present (meth)acrylic acid as a raw material, it is considered that the constituent unit (a2) is efficiently introduced in the polymer (A) obtained, in other words, carboxyl group is introduced efficiently. Thus, the constituent unit (a1) and the constituent unit (a2) function together, that is, the constituent unit (a2) contributes to good dispersion of polymer (A) and the polymer (A) containing the constituent unit (a1) makes good the diffusion of electrolyte ion, resulting in improvement of the charge-discharge property of electrochemical device. When the constituent unit (a2) is completely replaced by a constituent unit derived from an unsaturated carboxylic acid other than (meth)acrylic acid (e.g. a constituent unit derived from itaconic acid), it is impossible to obtain sufficient dispersion and accordingly obtain sufficient improvement in charge-discharge property. That is, since an unsaturated carboxylic acid (e.g. itaconic acid) other than (meth)acrylic acid has low copolymerizability with other monomer, it s difficult to introduce carboxyl group

into the polymer (A) obtained and accordingly obtain improvement in the charge-discharge property of electrochemical device.

The proportion of the constituent unit (a2) is preferably 0.3 to 5 mass %, more preferably 1 to 4 mass %, particularly preferably 1 to 3 mass %, relative to the total constituent units of the polymer (A). The proportion of the constituent unit (a2) in the above range is preferred because the electrochemical device obtained can have even higher charge-discharge property and a slurry for electrode, of high coatability can be obtained.

[1-1-2-2-1c] Constituent unit (a3)

Preferably, the polymer (A) further contains a constituent unit (a3) derived from a conjugated diene, besides the constituent unit (a1) and the constituent unit (a2). The containment of the constituent unit (a3) is preferred because the polymer (A) comes to have flexibility, the electrode layer obtained generates cracks hardly, and the adhesivity between current collector and electrode layer is improved.

As the monomer (conjugated diene) for giving the constituent unit derived from a conjugated diene, there can be mentioned, for example, 1,3-butadiene, isoprene, 2-chloro-1,3-butadiene and chloroprene. Of these, 1,3-butadiene is preferred because the electrode layer obtained has higher adhesivity with the current collector and this monomer has high copolymerizability.

The proportion of the constituent unit (a3) is preferably 20 to 60 mass %, more preferably 25 to 55 mass %, particularly preferably 30 to 53 mass %, relative to the total constituent units of the polymer (A). The proportion of the constituent unit (a3) in the above range is preferred because the polymer (A) obtained has an appropriate glass transition temperature. The electrode layer containing such a polymer (A) has appropriate flexibility and, in winding of the electrode (electrode sheet), cracks generate hardly. Further, the electrode layer surface has appropriate adhesivity and, therefore, there hardly appear problems such as roll staining, in pressing of electrode.

[1-1-2-2-1d] Other constituent unit

The polymer (A) may contain other constituent unit besides the constituent unit (a1), the constituent unit (a2) and the constituent unit (a3). As other constituent unit, there can be mentioned, for example, a constituent unit derived from an aromatic vinyl compound, a constituent unit derived from an unsaturated carboxylic acid other than (meth)acrylic acid, a constituent unit derived from a vinyl cyanide compound, and a constituent unit derived from an alkyl (meth) acrylate compound.

As the monomer (aromatic vinyl compound) giving a constituent unit derived from an aromatic vinyl compound, there can be mentioned, for example, styrene, $\alpha$ - methylstyrene, p-methylstyrene, vinyltoluene and chlorostyrene. Of these, styrene is preferred.

The proportion of the constituent unit derived from an aromatic vinyl compound is preferably 5 to 55 mass %, more preferably 10 to 53 mass %, particularly preferably 15 to 50 mass %, relative to the total constituent units of the polymer (A).

As the monomer giving a constituent unit derived from an unsaturated carboxylic acid other than (meth)acrylic acid, there can be mentioned, for example, itaconic acid, maleic acid and fumaric acid. Of these, itaconic acid is preferred.

The proportion of the constituent unit derived from an unsaturated carboxylic acid other than (meth)acrylic acid is preferably 0 to 5 mass %, more preferably 1 to 4 mass %, particularly preferably 1 to 3 mass %, relative to the total constituent units of the polymer (A).

As the alkyl (meth)acrylate, there can be mentioned, for example, alkyl (meth)acrylates such as methyl (meth) acrylate, ethyl (meth)acrylate, propyl (meth)acrylate, isopropyl (meth)acrylate, butyl (meth)acrylate, isobutyl (meth)acrylate, tert-butyl (meth)acrylate, pentyl (meth)acrylate, amyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate., isostearyl (meth)acrylate and the like; phenoxyalkyl (meth)acrylates such as phenoxyethyl (meth) acrylate, 2-hydroxy-3-phenoxypropyl (meth)acrylate and the like; alkoxyalkyl (meth)acrylates such as methoxyethyl (meth)acrylate, ethoxyethyl (meth)acrylate, propoxyethyl (meth)acrylate, butoxyethyl (meth)acrylate, methoxybutyl (meth)acrylate and the like;

polyethylene glycol (meth)acrylates such as polyethylene glycol mono(meth)acrylate, ethoxydiethylene glycol (meth)acrylate, methoxypolyethylene glycol (meth)acrylate, phenoxypolyethylene glycol (meth)acrylate, nonylphenoxypolyethylene glycol (meth)acrylate and the like; polypropylene glycol (meth)acrylates such as polypropylene glycol mono(meth)acrylate, methoxypolypropylene glycol (meth)acrylate, ethoxypolypropylene glycol (meth)acrylate, nonylphenoxypolypropylene glycol (meth)acrylate and the like; and cycloalkyl (meth)acrylates such as cyclohexyl (meth) acrylate, 4-butylcyclohexyl (meth)acrylate, dicyclopentanyl (meth)acrylate, dicyclopentenyl (meth)acrylate, dicyclopentadienyl (meth)acrylate, bornyl (meth)acrylate, isobornyl (meth)acrylate, tricyclodecanyl (meth)acrylate and the like.

As the vinyl cyanide compound for giving a constituent unit derived from a vinyl cyanide compound, there can be mentioned, for example, acrylonitrile, methacrylonitrile, α-chloroacrylonitrile, and α-ethylacrylonitrile. Of these, acrylonitrile and methacrylonitrile are referred because they have high polymerizability and are available easily.

The proportion of the constituent unit derived from a vinyl cyanide compound is preferably 5 to 25 mass %, more preferably 5 to 23 mass %, particularly preferably 5 to 20 mass %, relative to the total constituent units of the polymer (A). The proportion of the constituent unit derived from a vinyl cyanide compound, in the above range is preferred because the polymer (A) can have an appropriate swelling rate.

[1-1-2-2-1e] Preparation of polymer (A)

The polymer (A) can be synthesized by a known method such as emulsion polymerization or the like. In, for example, emulsion polymerization, polymerization is conducted in an aqueous medium containing the monomers for giving the above-mentioned constituents, in given amounts, in the presence of an emulsifier, a polymerization initiator, a molecular weight modifier and a chain transfer agent. The temperature of emulsion polymerization is preferably 40 to 80°C, and the time of emulsion polymerization is preferably 2 to 20 hours.

As the emulsifier, there can be used an anionic surfactant, a nonionic surfactant, an amphoteric surfactant, etc. They can be used singly or in admixture of two or more kinds.

As the anionic surfactant, there can be used a higher alcohol sulfate, an alkylbenzenesulfonic acid salt, an aliphatic sulfonic acid salt, a sulfonic acid ester of polyethylene glycol alkyl ether and the like. As the nonionic surfactant, there can be used an alkyl ester type of polyethylene glycol, an alkyl ether type of polyethylene glycol, an alkyl phenyl ether type of polyethylene glycol and the like. As the amphoteric surfactant, there can be used, for example, a surfactant whose anionic moiety is carboxylic acid salt, sulfuric acid ester salt, sulfonic acid salt or phosphoric acid ester salt and whose cationic moiety is amine salt or quaternary ammonium salt. Specifically, there can be mentioned, fore example, betaines such as lauryl betaine, stearyl betaine and the like; and amino acid types such as lauryl-β-alanine, lauryl-di (aminoethyl)glycine, octyldi(aminoethyl)glycine and the like.

The use amount of the emulsifier is preferably 0.5 to 5 mass parts relative to 100 mass parts of the total amount of the monomers for giving individual constituent units.

As the polymerization initiator, there can be used, for example, water-soluble polymerization initiators such as sodium persulfate, potassium persulfate, ammonium persulfate and the like; oil-soluble polymerization initiators such as benzoyl peroxide, lauryl peroxide, 2,2'-azobisisobutylnitrile and the like; and redox type polymerization initiators such as combination with reducing agent (e.g. sodium bisulfite). These polymerization initiators may be used singly or in admixture of two or more kinds. The use amount of the polymerization initiator is preferably 0.3 to 3 mass parts relative to 100 mass parts of the total amount of the monomers for giving individual constituent units.

As the chain transfer agent, there can be mentioned, for example, mercaptans such as octyl mercaptan, n-dodecyl mercaptan, tert-dodecyl mercaptan, n-hexadecyl mercaptan, n-tetradecyl mercaptan, tert-tetradecyl mercaptan and the like; xanthogen disulfides such as dimethylxanthogen disulfide, diethylxanthogen disulfide, diisopropylxanthogen disulfide and the like; thiuram disulfides such as tetramethylthiuram disulfide, tetraethylthiuram disulfide, tetrabutylthiuram disulfide and the like; halogenated hydrocarbons such as chloroform, carbon tetrachloride, ethylene bromide and the like; hydrocarbons such as pentaphenylethane, α-methylstyrene dimer and the like; acrolein, methacrolein, allyl alcohol, 2-ethylhexyl thioglycolate, terpinolene, α-terpinene, γ-terpinene, and dipentene.

Of these, preferred are mercaptans, xanthogen disulfides, thiuram disulfides, carbon tetrachloride, and α-methylstyrene dimer. These chain transfer agents may be used singly or in admixture of two or more kinds.

The use amount of the chain transfer agent is preferably 0.3 to 4 mass parts, more preferably 0.35 to 3 mass parts, particularly preferably 0.4 to 2 mass parts, relative to 100 mass parts of the total amount of the polymer raw materials containing the monomers for giving individual constituent units.

[1-1-2-2-1f] Properties of polymer (A)

Description is made below on the properties of polymer (A) in the order of swelling rate to electrolytic solution and other properties.

[1-1-2-2-1fa] Swelling rate to electrolytic solution

The polymer (A) needs to have particular affinity to the electrolytic solution A or the electrolytic solution B. That is, the polymer (A) needs to have a swelling rate of 120 to 600% to the electrolytic solution A, or a swelling rate of 110 to 300% to the electrolytic solution B. When the swelling rate to the electrolytic solution A is lower than 120% or the swelling rate to the electrolytic solution B is lower than 110%, the affinity of the polymer (A) to the electrolytic solution A or B is not sufficient and the electrode obtained is unable to give sufficient charge-discharge property. Meanwhile,

when the swelling rate to the electrolytic solution A is higher than 600% or the swelling rate to the electrolytic solution B is higher than 300%, the swelling of electrode by electrolytic solution A or B is too high and the internal resistance of battery increases, making it impossible to obtain sufficient charge-discharge property.

The swelling rate to the electrolytic solution A is preferably 150 to 400%, more preferably 200 to 350% to obtain good low-temperature property and good rate property. Meanwhile, the swelling rate to the electrolytic solution B is preferably 120 to 250%, more preferably 150 to 250% for good capacitor cycle property.

In the present Description, the swelling rate to the electrolytic solution is measured by either of the above-mentioned conditions (1) and (2). Specifically explaining, the swelling rate is measured by the following method. First, water (as a dispersing medium) is added to the polymer (A) to obtain a liquid dispersion having a solid content of 30%. Then, 25 g (in terms of solid content) of the liquid dispersion is poured into a frame of 8 cm x 14 cm, and the dispersion is dried at room temperature for 5 days to obtain a dried film. Then, the dried film is taken out of the frame and further dried at 80°C for 3 hours to obtain a test film. Then, the test film is cut into a plurality of sheets each of 2 cm x 2 cm, and each film is measured for initial mass ($W_o$). Then, each one film is placed in a screw bottle containing the electrolytic solution A and a screw bottle containing the electrolytic solution B and is immersed at 80°C for 24 hours. Then, the test film is taken out from the electrolytic solutions A or B, the electrolytic solution adhering onto the film surface is wiped off, and the resulting film is measured for after-immersion mass ($W_1$). Then, the swelling rate (%) to each electrolytic solution is calculated using a formula of "[after-immersion mass ($W_1$)/initial mass ($W_o$)]x100".

The swelling rate to the electrolytic solution can be controlled, for example, by copolymerizing a component having high affinity to the electrolytic solution and a component having low affinity to the electrolytic solution to control the polarity of the polymer (A) obtained.

As the component having high affinity to the electrolytic solution, there can be mentioned, for example, vinyl cyanide compounds such as acrylonitrile, methacrylonitrile and the like; (meth)acrylates having an alkyl group of 1 to 4 carbon atoms, such as methyl (meth)acrylate, ethyl (meth)acrylate, butyl (meth)acrylate and the like; amide group-containing monomers such as acrylamide, methacrylamide and the like; and (meth)acrylate compounds having a polyalkylene glycol, such as polyethylene glycol mono(meth)acrylate, methoxypolyethylene glycol mono(meth)acrylate and the like. Of these, acrylonitrile is preferred. As the component having low affinity to the electrolytic solution, there can be mentioned, for example, conjugated diene compounds; aromatic vinyl compounds; and (meth)acrylate compounds having an alkyl group of 8 or more carbon atoms, such as octyl (meth)acrylate, 2-ethylhexyl (meth)acrylate, stearyl (meth)acrylate and the like.

The component ratio of the component having high affinity to the electrolytic solution and the component having low affinity to the electrolytic solution, required to obtain a swelling rate to electrolytic solution, of the above-mentioned range, i.e. (the component having high affinity to the electrolytic solution/the component having low affinity to the electrolytic solution) differs depending upon the specific combination of the components copolymerized but is preferred to be approximately 5/95 to 70/ 30.

The proportion of the constituent unit derived from a crosslinkable monomer such as divinylbenzene, polyfunctional (meth)acrylate or the like is preferably 1 mass % or smaller, more preferably 0.1 mass % or smaller, relative to the total constituent units of the polymer (A). When the proportion is larger than 1 mass %, the polymer (A) is crosslinked and no sufficient swelling rate is obtained and is difficult to use as a material for the electrode of an electrochemical device superior in charge-discharge property (e.g. low-temperature property and high-rate property).

[1-1-2-2-1fb] Other properties.

The number-average particle diameter of the polymer (A) is preferably 40 to 500 nm, more preferably 50 to 300 nm. A number-average particle diameter of the above range is preferred because the dispersion stability of polymer particles is high and an electrode slurry of good property is obtained easily and moreover a higher adhesion between current collector and electrode layer is obtained. In the present Description, "number-average particle diameter" is measured by a dynamic light scattering method using water as a dispersing medium.

The glass transition temperature of the polymer (A) is preferably -50 to 50°C, more preferably -40 to 40°C. With a glass transition temperature of lower than -50°C, the surface of the electrode sheet becomes too sticky and, in pressing and compression of the electrode sheet, there may arise problems such as roll staining and the like. Meanwhile, with a glass transition temperature of higher than 50°C, the electrode sheet becomes hard and, in winding of the electrode sheet, cracks tend to appear easily. In the present Description, the glass transition temperature (Tg) is measured as follows. A polymer (A) of 4 g is poured into a frame of 5 cm x 4 cm and then dried at 70°C for 24 hours in a thermostat to obtain a film of about 100 μm in thickness. A test specimen of 10 mg is cut out from the film and is placed in an aluminum container, followed by sealing of the container. Then, using a differential scanning calorimeter (DSC 204 F1, of NETZSCH Group), a DSC chart is prepared in air at a temperature elevation rate of 20°C/min in a temperature range of -80°C to 100°C. Tg is calculated from the DSC chart. Incidentally, the reading of Tg from DSC chart is based on the method for measuring a mid-point glass transition temperature, described in JIS K 7121.

In the first electrochemical device of the present invention, there may be used, besides the above-mentioned positive electrode and negative electrode, appropriately selected members such as separator, sheathing member and the like, all used in conventional electrochemical devices.

[1-2] Separator

The separator is a thin insulating sheet and needs to be a material into which the electrolytic solution infiltrates easily. As the separator, there can be used, for example, a polyolefin (e.g. polyethylene or polypropylene)-made non-woven cloth.

[1-3] Sheathing member

As to the sheathing member, there is no particular restriction as long as it can accommodate the positive electrode, the negative electrode and the separator and an electrolytic solution can be filled thereinto. There can be mentioned, for example, a metal-made member or a member made of a laminate film of a metal foil and a polyolefin film.
As the electrolytic solution, there can be mentioned, for example, a solution of an electrolyte (a lithium compound) dissolved in a solvent, when a lithium secondary battery is produced.
As the electrolyte, there can be mentioned, for example, $LiClO_4$, $LiBF_4$, LiI, $LiPF_6$, $LiCF_3SO_3$, $LiAsF_6$, $LiSbF_6$, $LiAlCl_4$, LiCl, LiBr, $LiB(C_2H_5)_4$, $LiCH_3SO_3$, $LiC_4F_9SO_3$, $Li(C_4F_3SO_2)_2N$ and $Li[CO_2)_2]_2B$.
As the solvent, there can be mentioned, for example, carbonates such as propylene carbonate, ethylene carbonate, butylene carbonate, dimethyl carbonate, diethyl carbonate, methyl ethyl carbonate and the like; lactones such as γ-butyrolactone and the like; ethers such as trimethoxysilane, 1,2-dimethoxyethane, diethyl ether, 2-ethoxyethane, tetrahydrofuran, 2-methyltetrahydrofuran and the like; sulfoxides such as dimethyl sulfoxide and the like; oxolanes such as 1,3-dioxolane, 4-methyl-1,3-dioxolane and the like; nitrogen-containing compounds such as acetonitrile, nitromethane and the like; esters such as methyl formate, methyl acetate, butyl acetate, methyl propionate, ethyl propionate, phosphoric acid triester and the like; glymes diglyme, triglyme, tetraglyme and the like; ketones such as acetone, diethyl ketone, methyl ethyl ketone, methyl isobutyl ketone and the like; sulfones such as sulfolane and the like; oxazolidinones such as 2-methyl-2-oxazolidinone and the like; and sultones such as 1,3-propanesultone, 4-butanesultone, naphthasultone and the like.
In producing an electric double layer capacitor, there can be used an electrolytic solution obtained by dissolving, in the above-mentioned solvent, an electrolyte such as tetraethylammonium tetrafluoroborate, triethylmethylammonium tetrafluoroborate, tetraethylammonium hexafluorophosphate and the like.
In producing a lithium ion capacitor, there can be used the same electrolytic solution as used in production of the above-mentioned lithium ion secondary battery.

[1-4] Method for production of the first electrochemical device of the present invention

The first electrochemical device of the present invention can be produced as follows, for example.
First, a positive electrode and a negative electrode are each formed in a strip shape. A separator is placed between the strip-shaped positive electrode and the strip-shaped negative electrode to form an electrode group. The electrode group is wound so as to show a spiral section and is accommodated in a sheathing member. Then, an electrolytic solution is poured into the sheathing member accommodating the electrode group, to immerse the electrode group in the electrolytic solution. Then, the opening of the sheathing member is sealed, whereby an electrochemical device can be produced. Incidentally, it is possible to form a plurality of electrode groups, then wind the plurality of electrode groups, and accommodate the wound electrode groups in a sheathing member.
At least either of the positive electrode and the negative electrode can be obtained by coating an electrode slurry on at least either side of a current collector. For coating the electrode slurry, a conventional method can be employed. There can be mentioned, for example, a doctor blade method, a reverse roll method, a comma bar method, a gravure method and an air knife method.
With respect to the drying conditions of the coated film of electrode slurry, the drying temperature is preferably 20 to 250°C, more preferably 50 to 150°C and the drying time is preferably 1 to 120 minutes, more preferably 5 to 60 minutes.
Incidentally, it is preferred that an electrode slurry is coated on at least one side of the current collector, the coated film is dried under the above conditions, and the dried film is pressed. For the pressing, there can be used, for example, a high-pressure super-press, a soft calendar and a 1-ton press.

[1-4-1] Electrode slurry

The electrode slurry contains a binder composition containing the polymer (A) and the dispersing medium (B) and an active material. An electrode (positive electrode, negative electrode or both) is produced using the electrode slurry containing the polymer (A); therefore, in the electrode produced, the diffusion of electrolyte ion in polymer network is good and there can be obtained an electrochemical device superior in charge-discharge properties such as low-temperature property, high-rate property and the like. In production of the electrochemical device of the present invention, it is preferred to use an electrode slurry using an aqueous dispersing medium (B). The reason is that, by using an aqueous electrode slurry, the load to environment can be small and the safety of electrode production process can be high.

[1-4-1a] Dispersing medium

As the dispersing medium (B), there can be mentioned water; an organic dispersing medium such as aromatic hydrocarbon compound, non-aromatic hydrocarbon compound, oxygen-containing hydrocarbon compound, chlorine-containing hydrocarbon compound, nitrogen-containing hydrocarbon compound, sulfur-containing hydrocarbon compound or the like; and so forth. When water is used as the dispersing medium, the aqueous dispersing medium used in emulsion polymerization for polymer (A) production may be used as it is.
As specific examples of the organic dispersing medium, there can be mentioned toluene, N-methylpyrrolidone (NMP), methyl isobutyl ketone (MIBK), cyclohexanone, dimethyl sulfoxide (DMSO) and dimethylformamide (DMF).
The concentration of the polymer (A) in binder composition can be appropriately set by the kind of the dispersing medium (B) used, so as to obtain a binder composition having a viscosity range enabling easy handling.
The solid concentration of the binder composition is preferably 15 to 50 mass %, more preferably 20 to 40 mass %. When the solid concentration is lower than 15%, the solid content of electrode slurry is low when a given amount (in terms of solid content) of a binder composition is added to an active material, a conductive carbon, etc.; therefore, there is a fear that an electrode of desired thickness is not produced. Meanwhile, when the solid content is higher than 50%, the viscosity of binder composition is high; therefore, there is a fear that the handling in compounding process (e.g. metering), etc. is difficult. In the present Description, "in terms of solid content" indicates conversion into a moiety of composition minus dispersing medium.
The binder composition may contain, besides the polymer (A) and the dispersing medium (B), the emulsifier, polymerization initiator, chain transfer agent and the like. used in production of the polymer (A).
The proportion in terms of solid content of the binder composition is preferably 0.5 to 5 mass parts, more preferably 0.75 to 4 mass parts relative to 100 mass parts of the electrode active material. When the proportion is smaller than 0.5 mass part, good adhesion may not be obtained between the electrode layer and the current collector. Meanwhile, when the proportion is larger than 5 mass parts, it may be difficult to attain sufficient improvement in the properties of the electrochemical device obtained.

[1-4-1b] Additives

The electrode slurry may contain, besides the binder composition and the electrode active material, additives such as thickening agent, dispersing agent such as sodium polyacrylate, surfactant, anti-foaming agent and the like.
The electrode slurry can be prepared by mixing a binder composition, an electrode active material and, as necessary, additives using a mixing apparatus such as stirrer, deaerator, bead mill, high-pressure homogenizer or the like. Incidentally, the mixing is preferably conducted under reduced pressure. With the mixing under reduced pressure, formation of air foams in the electrode layer obtained can be prevented.

[2] Electrochemical device

The second electrochemical device of the present invention has a positive electrode and a negative electrode forming a pair with the positive electrode, wherein at least either of the positive electrode and the negative electrode has a sheet-like current collector and an electrode layer provided at least at one side of the current collector, the electrode layer has an electrode active material and a binder which bonds and fixes powders of the electrode active material each other and further the electrode active material and the current collector, and the binder contains, as a component, a polymer (A) (hereinafter, the polymer (A) is referred to as "polymer (C)" in some cases) having a constituent unit (a1) (hereinafter, the constituent unit (a1) is referred to as "constituent unit (c1)" in some cases) derived from an amide group-containing monomer, in an amount of 1 to 10 mass % relative to the total constituent units and a constituent unit (a2) (hereinafter, the constituent unit (a2) is referred to as "constituent unit (c2)" in some cases) derived from (meth)acrylic acid, in an amount of 0.3 to 5 mass % relative to the total constituent units. This electrochemical device contains, as a component of the binder, the polymer (C). Since the electrochemical device includes a polymer (C) as a constituent of

binder, the electrochemical device shows good diffusion of electrolyte ion in polymer network and superior charge-discharge property.

As specific examples of the second electrochemical device of the present invention, there can be mentioned a lithium ion secondary battery, an electric double layer capacitor and a lithium ion capacitor.

[2-1] Polymer (C)

The polymer (C) contains the constituent unit (c1) in an amount of 1 to 10 mass % relative to 100 mass % of the total constituent units and the constituent unit (c2) in an amount of 0.3 to 5 mass % relative to 100 mass % of the total constituent units. With this polymer (C), there can be obtained a binder composition usable as a material for the electrode used in an electrochemical device superior in charge-discharge property. Such a polymer (C) has a particular affinity to the electrolytic solution A or the electrolytic solution B. Specifically explaining, the swelling rate to the electrolytic solution A under the above-mentioned condition is 120 to 600%, and the swelling rate to the electrolytic solution B under the above-mentioned condition is 110 to 300%.

[2-1-1] Constituent unit (c1)

By using, as a binder, the polymer (C) having a constituent unit (c1) derived from an amide group-containing monomer, the affinity to electrolytic solution is improved and the adhesivity between electrode layer and current collector is improved. Therefore, it is considered that the charge-discharge property of electrochemical device is improved. Incidentally, as the constituent unit (c1), there can be mentioned, for example, the same constituent unit as the constituent unit (a1).

The proportion of the constituent unit (c1) is 1 to 10 mass %, preferably 2 to 8 mass %, more preferably 2 to 5 mass % relative to 100 mass % of the total constituent units of the polymer (C). When the proportion is smaller than 1 mass %, the content of amide group is small and accordingly the electrochemical device obtained is unable to exhibit sufficient charge-discharge property. Meanwhile, when the proportion is larger than 10 mass %, the electrode slurry obtained has low coatability, making it impossible to obtain a battery (electrochemical device) superior in charge-discharge property.

[2-1-2] Constituent unit (c2)

The constituent unit (c2) is a constituent unit derived from (meth)acrylic acid. The constituent unit (c1) and the constituent unit (c2) function together, whereby can be obtained a binder composition capable of giving improved charge-discharge property. When the constituent unit (c2) is completely replaced by a constituent unit derived from an unsaturated carboxylic acid other than (meth)acrylic acid (e.g. a constituent unit derived from itaconic acid), it is impossible to obtain sufficient dispersion and accordingly obtain sufficient improvement in charge-discharge property. That is, since an unsaturated carboxylic acid (e.g. itaconic acid) other than (meth)acrylic acid has low copolymerizability with other monomer, it is difficult to introduce a carboxylic acid into the polymer (A) and accordingly attain improved charge-discharge property in the electrochemical device obtained.

The proportion of the constituent unit (c2) is 0.3 to 5 mass %, preferably 1 to 4 mass %, more preferably 1 to 3 mass % relative to the total constituent units of the polymer (C). When the proportion is smaller than 0.3 mass %, it is impossible to obtain an electrochemical device having sufficient charge-discharge property. Meanwhile, when the proportion is larger than 5 mass %, the electrode slurry obtained has low coatability, making it impossible to obtain a battery (electrochemical device) superior in charge-discharge property.

[2-1-3] Constituent unit (c3)

Preferably, the polymer (C) further contains a constituent unit (a constituent unit (C3)) derived from a conjugated diene, besides the constituent unit (c1) and the constituent unit (c2). By further containing the constituent unit (c3), the polymer (C) can have flexibility and an electrode layer having high adhesivity with a current collector can be obtained.

As the constituent unit (C3), there can be mentioned, for example, the same constituent unit as the constituent unit (a3). The proportion of the constituent unit (c3) may be the same proportion as that of the constituent unit (a3).

[2-1-4] Other constituent unit

The polymer (C) may contain other constituent unit besides the constituent unit (c1), the constituent unit (c2) and the constituent unit (c3). As the other constituent unit, there can be mentioned, for example, the same constituent unit as the previously mentioned other constituent unit.

The proportion of the constituent unit derived from a crosslinkable monomer such as divinylbenzene, polyfunctional (meth)acrylate or the like is preferably 1 mass % or smaller, more preferably 0.1 mass % or smaller relative to the total constituent units of the polymer (C). When the proportion is larger than 1 mass %, the polymer (C) is crosslinked and thereby has no sufficient swelling rate, making it difficult to use the polymer (C) as a material for the electrode used in an electrochemical device superior in charge-discharge property.
The polymer (C) can be prepared by the same process as for the polymer (A).
As the elements other than the polymer (C), used in the second electrochemical device of the present invention, such as positive electrode, negative electrode, separator, electrolytic solution, sheathing member, current collector, electrode active material and the like, there can be preferably used the same elements other than the polymer (A), used in the first electrochemical device of the present invention, such as positive electrode, negative electrode, separator, electrolytic solution, sheathing member, current collector, electrode active material and the like.
The second electrochemical device of the present invention can be produced in the same manner as for the first electrochemical device of the present invention, except that the polymer (C) is used.

[3] First binder composition

The first binder composition of the present invention contains (A) a polymer having a constituent unit (a1) derived from an amide group-containing monomer and a constituent unit (a2) derived from (meth)acrylic acid, and (B) a dispersing medium, wherein the polymer (A) satisfies the above-mentioned condition (1) or (2). Since this binder composition contains the polymer (A) which satisfies the condition (1) or (2), that is, it shows a particular swelling rate to an electrolytic solution A or an electrolytic solution B, the binder composition can be used as a material for the electrode of an electrochemical device superior in charge-discharge property. In other words, since the binder composition contains a polymer (A) having a constituent unit (a1) and a constituent unit (a2) and the polymer (A) shows a particular swelling rate to an electrolytic solution A or an electrolytic solution B, the diffusion of electrolyte ion (lithium ion in lithium secondary battery) in the polymer network of electrode layer is good and accordingly the conductivity is improved; as a result, the charge-discharge property is considered to be improved.
The polymer (A) in the first binder composition of the present invention may be the same as the polymer (A) used in the first electrochemical device of the present invention. The dispersing medium (B) in the first binder composition of the present invention may be the same as the dispersing medium (B) used in production of the first electrochemical device of the present invention.
In the first binder composition of the present invention, the concentration of the polymer (A) can be appropriately set by the kind of the dispersing medium (B) used, so that the binder composition can have a viscosity range allowing for easy handling.
In the first binder composition of the present invention, the solid content is preferably 15 to 50 mass %, more preferably 20 to 40 mass %. When the solid content is lower than 15%, the solid content of the electrode slurry is low when a given amount (in terms of solid content) of a binder composition is added to an active material, a conductive carbon and the like and, consequently, it may be impossible to produce an electrode of desired thickness. Meanwhile, when the solid content of the binder composition is higher than 50%, the binder composition has a high viscosity and, consequently, the handling of the binder composition in compounding process such as metering and the like may be difficult.
Incidentally, the first binder composition of the present invention may contain an emulsifier, a polymerization initiator, a chain transfer agent and the like, all used in production of polymer (A), besides the polymer (A) and the dispersing medium (B).

[4] Second binder composition

The second binder composition of the present invention contains (A) a polymer containing a constituent unit (a1) derived from an amide group-containing monomer, in an amount of 1 to 10 mass % relative to 100 mass % of the total constituent units and a constituent unit (a2) derived from (meth)acrylic acid, in an amount of 0.3 to 5 mass % relative to 100 mass % of the total constituent units, and (B) a dispersing medium. Containing the polymer (A), the binder composition can be used as a material for the electrode of an electrochemical device superior in charge-discharge property. In other words, since the binder composition contains a polymer (A) containing a given amount of a constituent unit (a1) and a given amount of a constituent unit (a2), the diffusion of electrolyte ion (lithium ion in lithium secondary battery) in the polymer network of electrode layer is good and accordingly the conductivity is improved; as a result, the charge-discharge property is considered to be improved.
The polymer (A) in the second binder composition of the present invention may be the same as the polymer (A) used in the second electrochemical device of the present invention. The dispersing medium (B) in the second binder composition of the present invention may be the same as the dispersing medium (B) used in production of the first

electrochemical device of the present invention.

In the second binder composition of the present invention, the concentration of the polymer (A) can be appropriately set by the kind of the dispersing medium (B) used, so that the binder composition can have a viscosity range allowing for easy handling.

In the second binder composition of the present invention, the solid content is preferably 15 to 50 mass %, more preferably 20 to 40 mass %. When the solid content is lower than 15%, the solid content of the electrode slurry is low when a given amount (in terms of solid content) of a binder composition is added to an active material, a conductive carbon and the like and, consequently, it may be impossible to produce an electrode of desired thickness. Meanwhile, when the solid content of the binder composition is higher than 50%, the binder composition has a high viscosity and, consequently, the handling of the binder composition in compounding process such as metering and the like) may be difficult.

Incidentally, the second binder composition of the present invention may contain an emulsifier, a polymerization initiator, a chain transfer agent and the like, all used in production of polymer (A), besides the polymer (A) and the dispersing medium (B).

EXAMPLES

The present invention is specifically described below by way of Examples and Comparative Examples. However, the present invention is in no way restricted to the Examples and the Comparative Examples. Incidentally, "parts" and "%" in the followings are based on mass unless otherwise specified. The measurement methods of properties and the evaluation methods of properties are described below.

[Number-average particle diameter]

A polymer (A) obtained was dispersed in water (a dispersing medium) to prepare a liquid dispersion. Measurement was conducted for the liquid dispersion using, as a measurement apparatus, a light scattering measurement apparatus "ALV 5000" of ALV-GmbH. which uses, as a light source, a He-Ne laser of 22 mW (wavelength = 632.8 nm).

[Swelling rate to electrolytic solution]

A binder composition was diluted to a solid content of 30% using water. Then, 25 g of the binder composition after dilution was poured into a frame of 8 cm x 14 cm and dried at room temperature for 5 days to obtain a dried film. Then, the dried film was taken out from the frame and further dried at 80°C for 3 hours to obtain a test film. Then, the test film was cut to obtain a plurality of sheets each of 2 cm x 2 cm, and each film was measured for initial mass ($W_o$). Then, each one film was placed in a screw bottle containing an electrolytic solution A and a screw bottle containing an electrolytic solution B and was immersed in the electrolytic solution at 80°C for 24 hours. Then, the test film was taken out from the electrolytic solutions A or B, the electrolytic solution A or B adhering onto the film surface was wiped off, and the resulting film was measured for after-immersion mass ($W_1$). Then, the swelling rate (%) to each electrolytic solution was calculated using a formula of "[after-immersion mass ($W_1$) /initial mass ($W_o$)]x100". In Tables 1 and 2, this measurement item is indicated as "Swelling rate to electrolytic solution A (%)" or "Swelling rate to electrolytic solution B (%)".

[Peeling strength]

A test piece of 2 cm (width) x 12 cm (length) was cut off from an electrode to be evaluated. A double-coated tape was adhered onto the electrode layer side of the test piece. Then, with the help of the double-coated tape, the test piece was adhered onto an aluminum sheet. Next, part of the current collector of the test piece was peeled from the electrode layer. On the surface of the peeled portion of the current collector was adhered a tape of 18 mm in width [Cellotape (trade name and registered trade name), a product of Nichiban Co., Ltd., specified by JIS Z 1522]. Then, the tape was pulled to a 90° direction at a speed of 50 mm/min. There was measured a tape-pulling strength (peeling strength) (mN/2 cm) when the current collector was peeled further from the electrode layer. This measurement was conducted six times each using a different test piece. The average of six measurements was calculated as a peeling strength (mN/2 cm). Incidentally, a larger peeling strength can be interpreted to indicate a higher adhesion strength between current collector and electrode layer and less likelihood of electrode layer peeling from current collector. In Tables 1 and 2, this evaluation item is indicated as "Peeling strength [mN/2 cm]".

[Rate property]

First, a lithium ion secondary battery produced was charged at a constant current (0.2 C) and a constant voltage (4.2 V) and then discharged at a constant current (0.2 C). This charging and discharging cycle was repeated three times and an average discharge capacity ($C_{0.2}$) was calculated. Then, the battery was further charged at a constant current (0.2 C) and a constant voltage (4.2 V) and then discharged at a constant current (1.0 C), and a capacity ($C_{1.0}$) at this time was measured. Then, using these measured values, a rate property (%) was calculated using the following formula.

$$\text{Rate property (\%)} = \{(C_{1.0})/(C_{0.2})\} \text{x} 100$$

Incidentally, in Tables 1 and 2, this evaluation item is indicated as "Rate property (1.0 C/0.2 C) [%]. Incidentally, all the measurements were conducted at 25°C.

[Low-temperature property]

First, a lithium ion secondary battery produced was charged at a constant current (0.2 C) and a constant voltage (4.2 V) at 25°C and then discharged at a constant current (0.2 C). This charging and discharging cycle was repeated three times and an average discharge capacity ($C_{0.2}$) was calculated. Then, the battery was allowed to stand at 0°c for 24 hours. Then, at 0°C, the battery was charged at a constant current (0.5 C) and a constant voltage (4.2 V) and then discharged at a constant current (0.5 C). This charging and discharging cycle was repeated ten times and an average capacity ($C_{10}$ cycles) was calculated. Then, using the measured values, a low-temperature property [%] was calculated using the following formula.

$$\text{Low-temperature property (\%)} = \{(C_{10\ \text{cycles}})/(C_{0.2})\} \text{x} 100$$

Incidentally, in Tables 1 and 2, this evaluation item is indicated as "Low-temperature property (0°C) [%].

[Capacitor cycle property (%)]

First, a capacitor secondary battery produced was charged at a constant current (1 C) and a constant voltage (3.5 V) and then discharged at a constant current (1 C). This charging and discharging cycle was repeated three times and an average discharge capacity ($C_3$) was calculated. Then, the charging and discharging cycle was repeated total 100 times, and an average discharge capacity ($C_{100}$) was calculated. Then, there was calculated a retention percentage of discharge capacity to the discharge capacity of the third cycle, using the following formula, and it was taken as capacitor cycle property (%).

$$\text{Capacitor cycle property (\%)} = \{(C_{100})/(C_3)\} \text{x} 100$$

Incidentally, all the measurements were conducted at 25°C.

(Example 1)

[Evaluation of negative electrode of lithium ion secondary battery]

Into a temperature-controllable autoclave provided with a stirrer were fed 200 parts of water as a dispersing medium, 0.6 part of sodium dodecylbenzenesulfonate, 1.0 part of potassium persulfate, 0.5 part of sodium bisulfite, and the monomers and chain transfer agents shown in Table 1, of amounts shown in Table 1, in one portion, and a polymerization reaction was conducted at 80°C for 6 hours. After completion of the polymerization reaction, the reaction mixture was adjusted t a pH of 7.2. Then, 1 part of sodium polyacrylate was added as a dispersing agent, after which the residual monomers were removed by steam distillation. The residual mixture was concentrated to a solid content of 48% under reduced pressure to obtain a binder composition (number-average particle diameter: 120 nm). Incidentally, in the above polymerization reaction, the nearly total amounts of the monomers shown in Table 1 were reacted. The same is true also in the following Examples and Comparative Examples.

(Production of negative electrode of lithium ion secondary battery)

In a biaxial planetary mixer ("TK Hivis Mix 2P-03", a product of Primix Corporation) were placed 1 part (in terms of solid content) of "CMC 2200", a product of Daicel corporation as a thickening agent, 100 parts (in terms of solid content) of graphite as a negative electrode active material, and 68 parts of water, after which stirring was conducted at 60 rpm for 1 hour. Then, 1 part (in terms of slid content) of the binder composition was added, followed by stirring for 1 hour, to obtain a paste. 34 parts of water was added to the paste, after which stirring and mixing was conducted at 200 rpm for 2 minutes and at 1,800 rpm for 5 minutes, in this order, using a stirrer and deaerator ("Thinky Mixer", a product of THINKY Corporation). Then, stirring and mixing was conducted at 1,800 rpm for 1.5 minutes under vacuum, to prepare a slurry for negative electrode.

Then, the negative electrode slurry was uniformly coated on a current collector made of a copper foil, by a doctor blade method, so that the film thickness after drying became 100 μm, followed by drying at 120°C for 20 minutes. Then, the film obtained was pressed by a roll press so that the electrode layer obtained had a density of 1.8 $g/cm^3$ whereby a negative electrode of lithium ion secondary battery was obtained.

(Production of counter electrode (PVdF type positive electrode)

Next, a positive electrode as a counter electrode used in the evaluation was produced. First, in a biaxial planetary mixer (TK Hivis Mix 2P-03, a product of Primix Corporation) were placed 4 parts (in terms of solid content) of PVdF (a polyvinylidene fluoride), 100 parts (in terms of solid content) of iron lithium phosphate as a positive electrode active material, 5 parts (in terms of solid content) of acetylene black as a conductive material and 25 parts of NMP (n-methylpyrrolidone), followed by stirring at 60 rpm for 1 hour. Then, 10 parts of NMP was added. Then, using a stirrer and deaerator ("Thinky Mixer", a product of THINKY Corporation), stirring and mixing was conducted at 200 rpm for 2 minutes, at 1,800 rpm for 5 minutes and, under vacuum, at 1,800 rpm for 1.5 minutes, to prepare a slurry for positive electrode.

Then, the positive electrode slurry was uniformly coated on a current collector made of an aluminum foil, by a doctor blade method, so that the film thickness after drying became 90 μm, followed by drying at 120°C for 20 minutes. Then, the film obtained was pressed by a roll press so that the electrode layer obtained had a density of 3.8 $g/cm^3$, whereby a positive electrode of lithium ion secondary battery was obtained.

Next, the punched negative electrode of lithium ion secondary battery of 16.16 mm in diameter was placed on a double electrode-type coin cell ["HS Flat Cell" (trade name), a product of Hohsen Corp.] in a glove box. Then, on the negative electrode was placed a separator (trade name "Celgard #2400", a product of Celgard, LLC.) which was a punched polypropylene-made porous membrane of 18 mm in diameter. An electrolytic solution A was poured thereinto, with a care being taken so as to prevent air penetration. Then, the punched positive electrode of lithium ion secondary battery of 15.95 mm in diameter was placed on the separator, and the exterior body of the double electrode-type coin cell was screwed up for sealing, to produce a lithium ion secondary battery (an electrochemical device).

The lithium ion secondary battery was evaluated for the number-average particle diameter, swelling rate to electrolytic solution, peeling strength, rate property and low-temperature property, by the previously mentioned methods. The evaluation results are shown in Table 1; that is, the number-average particle diameter was 120 nm, the swelling rate to electrolytic solution A was 170%, the peeling strength was 490 (mN/2 cm), the rate property was 85%, and the low-temperature property was 88%. Incidentally, Examples 1 to 14 and Comparative Examples 1 to 4 are each a case in which the electrode layer of lithium ion secondary battery negative electrode contained a polymer (A) satisfying the condition (1) or (2). In Tables 1 and 2, The results are indicated as "Evaluation for negative electrode of lithium ion secondary battery" at the parts labeled "Evaluation."

(Examples 2 to 14 and Comparative Examples 1 to 4)

Binder compositions were obtained in the same manner as in Example 1 except that each component shown in Tables 1 and 2 was used in an amount (mass parts) shown in Tables 1 and 2. Then, lithium ion secondary batteries were produced in the same manner as in Example 1 except that the binder compositions obtained above were used. Each lithium ion secondary battery was evaluated the number-average particle diameter, swelling rate to electrolytic solution, peeling strength, rate property and low-temperature property, by the previously mentioned methods. The evaluation results are shown in Tables 1 and 2.

Table 1

| | | Examples | | | | | | | | | | | | | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 |
| Monomers | Butadiene (mass parts) | 37.5 | 37.5 | 37.5 | 37.5 | 37.5 | 37.5 | 37.5 | 37.5 | 37.5 | 37.5 | 37.5 | 26.8 | 48.5 | 37.5 | 37.5 | - | - |
| | Styrene (mass parts) | 44.5 | 44.5 | 44.5 | 40.8 | 41.0 | 39.5 | 34.5 | 21.0 | 11.0 | 47.0 | 44.5 | 55.2 | 33.5 | 44.5 | 44.5 | 10.5 | - |
| | Methyl methacrylate (mass parts) | 11.5 | 11.5 | 11.5 | 11.5 | 11.5 | 11.5 | 11.5 | 11.5 | 20.0 | 11.5 | 11.5 | 9.5 | 11.5 | 11.5 | 11.5 | 35.0 | 40.0 |
| | Acrylonitrile (mass parts) | - | - | - | 5.0 | - | 5.0 | 10.0 | 20.0 | 25.0 | - | - | 2.0 | - | - | - | 8.0 | 8.0 |
| | Butyl acrylate (mass parts) | - | - | - | - | - | - | - | - | - | - | - | - | - | - | - | 10.0 | 10.5 |
| | 2-Ethylhexyl acrylate (mass parts) | - | - | - | - | - | - | - | - | - | - | - | - | - | - | - | 30.0 | 25.0 |
| | Acrylic acid (mass parts) | 1.0 | 1.0 | 1.0 | 1.0 | 1.0 | 1.0 | 1.0 | 1.0 | 1.0 | 0.5 | 3.0 | 1.0 | 1.0 | 1.0 | 1.0 | 1.0 | 1.0 |
| | Itaconic acid (mass parts) | 3.0 | 3.0 | 3.0 | 3.0 | 3.0 | 3.0 | 3.0 | 3.0 | 3.0 | 1.0 | 1.0 | 3.0 | 3.0 | 3.0 | 3.0 | 3.0 | 3.0 |
| | Acrylamide (mass parts) | 2.5 | - | - | 1.2 | - | - | - | - | - | - | - | - | - | - | - | - | - |
| | Methacrylamide (mass parts) | - | 2.5 | - | - | 6.0 | 2.5 | 2.5 | 6.0 | 2.5 | 2.5 | 2.5 | 2.5 | 2.5 | 2.5 | 2.5 | 2.5 | 2.5 |
| | N-isopropylacrylamide (mass parts) | - | - | 2.5 | - | - | - | - | - | - | - | - | - | - | - | - | - | - |
| Chain transfer agents | $\alpha$-methylstyrene dimer (mass parts) | 0.50 | 0.50 | 0.50 | - | 0.50 | 0.50 | 0.50 | 0.50 | 0.50 | 0.50 | 0.50 | 0.50 | 0.50 | 0.10 | 0.50 | - | - |
| | Dodecylmercaptan (mass parts) | 0.25 | 0.25 | 0.25 | - | 0.25 | 0.25 | 0.25 | 0.25 | 0.25 | 0.25 | 0.25 | 0.25 | 0.25 | 0.05 | 0.25 | - | - |
| Seed particles | Fluoropolymer latex (mass parts) | - | - | - | - | - | - | - | - | - | - | - | - | - | - | - | - | 10 |

(continued)

| | Examples | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| Number-average particle diameter [nm] | 120 | 120 | 120 | 120 | 120 | 120 | 120 | 120 | 120 | 120 | 120 | 120 | 120 | 120 | 120 | 180 | 280 |
| Swelling rate to electrolytic solution A [%] | 170 | 150 | 160 | 140 | 220 | 210 | 320 | 380 | 530 | 150 | 150 | 180 | 130 | 140 | 150 | 290 | 450 |
| Swelling rate to electrolytic solution B [%] | - | - | - | - | - | - | - | - | - | - | - | - | - | - | - | - | - |
| Evaluation | Evaluation for negative electrode of lithium ion secondary battery | | | | | | | | | | | | | | Evaluation for positive electrode of lithium ion secondary battery | | |
| Peeling strength [mN/2 cm] | 490 | 495 | 510 | 480 | 500 | 470 | 480 | 470 | 450 | 510 | 530 | 430 | 530 | 460 | 480 | 490 | 420 |
| Rate property (1.0 C/0.2 C) [%] | 85 | 90 | 88 | 75 | 91 | 92 | 93 | 88 | 85 | 80 | 88 | 88 | 83 | 84 | 88 | 87 | 86 |
| Low-temperature property (0°C) [%] | 88 | 92 | 90 | 75 | 91 | 94 | 94 | 85 | 83 | 82 | 89 | 88 | 86 | 87 | 90 | 91 | 92 |
| Capacitor cycle property [%] | - | - | - | - | - | - | - | - | - | - | - | - | - | - | - | - | - |

Table 2

| | | Comparative Examples | | | | | | | | |
|---|---|---|---|---|---|---|---|---|---|---|
| | | 1 | 2 | 3 | 4 | 5 | 6 | 7 | 8 | 9 |
| Monomers | Butadiene (mass parts) | 37.5 | 37.5 | 42.0 | 45.0 | - | 37.5 | 37.5 | 37.5 | 37.5 |
| | Styrene (mass parts) | 45.8 | 45.0 | 3.0 | 34.0 | 13.0 | 45.8 | 45.8 | 10.0 | 45.8 |
| | Methyl methacrylate (mass parts) | 12.7 | 11.5 | 15.0 | 17.1 | 35.0 | 12.7 | 12.7 | 20.0 | 12.4 |
| | Acrylonitrile (mass parts) | - | - | 36.0 | - | 8.0 | - | - | 28.5 | - |
| | Butyl acrylate (mass parts) | - | - | - | - | 10.0 | - | - | - | - |
| | 2-Ethylhexyl acrylate (mass parts) | - | - | - | - | 30.0 | - | - | - | - |
| | Acrylic acid (mass parts) | 2.0 | - | 2.0 | 1.5 | 1.0 | 1.0 | 1.0 | 1.0 | 1.0 |
| | Itaconic acid (mass parts) | 2.0 | 3.0 | 2.0 | 1.0 | 3.0 | 3.0 | 3.0 | 3.0 | 3.0 |
| | Acrylamide (mass parts) | - | 3.0 | - | 1.1 | - | - | - | - | - |
| | Methacrylamide (mass parts) | - | - | - | - | - | - | - | - | - |
| | N-isopropylacrylamide (mass parts) | - | - | - | - | | - | - | - | - |
| | Divinylbenzene (mass parts) | - | - | - | 0.3 | - | - | - | - | 0.3 |
| Chain transfer agents | α-methylstyrene dimer (mass parts) | 0.50 | 0.50 | 0.50 | 0.10 | - | - | - | 0.10 | 0.10 |
| | Dodecylmercaptan (mass parts) | 0.25 | 0.25 | 0.25 | 0.05 | - | - | - | 0.05 | 0.05 |
| Seed particles | Fluoropolymer latex (mass parts) | - | - | - | - | - | - | - | - | - |
| Number-average particle diameter [nm] | | 120 | 120 | 120 | 120 | 180 | 120 | 120 | 120 | 120 |
| Swelling rate to electrolytic solution A [%] | | 150 | 180 | 680 | 112 | 290 | 140 | - | - | - |
| Swelling rate to electrolytic solution B [%] | | - | - | - | - | - | - | 140 | 350 | 103 |

(continued)

| Evaluation | Evaluation for negative electrode of lithium ion secondary battery | | | | Evaluation for positive electrode of lithium ion secondary battery | | Evaluation for capacitor electrode | | |
|---|---|---|---|---|---|---|---|---|---|
| Peeling strength [mN/2 cm] | 480 | 470 | 450 | 450 | 490 | 480 | 220 | 185 | 190 |
| Rate property (1.0 C/0.2 C) [%] | 65 | 60 | 58 | 50 | 65 | 65 | - | - | - |
| Low-temperature property (0°C) [%] | 61 | 65 | 55 | 45 | 68 | 63 | - | - | - |
| Capacitor cycle property [%] | - | - | - | - | - | - | 50 | 55 | 45 |

(Example 15)

[Evaluation of positive electrode of lithium ion secondary battery]

First, a binder composition was obtained in the same manner as in Example 1 except that each component shown in Table 1 and Table 2 was used in an amount (mass parts) shown in Table 1 and Table 2.

(Production of positive electrode of lithium ion secondary battery)

Next, in a biaxial planetary mixer (TK Hivis Mix 2P-03, a product of Primix Corporation) were placed 1 part (in terms of solid content) of "CMC 2200", a product of Daicel corporation as a thickening agent, 100 parts (in terms of solid content) of iron lithium phosphate as a positive electrode active material, 5 parts (in terms of solid content) of acetylene black as a conductive agent and 25 parts of water, after which stirring was conducted at 60 rpm for 1 hour. Then, 2 parts (in terms of slid content) of the binder composition was added, followed by stirring for 1 hour, to obtain a paste. 10 parts of water was added to the paste, after which stirring and mixing was conducted at 200 rpm for 2 minutes, at 1,800 rpm for 5 minutes and, under vacuum, at 1,800 rpm for 1.5 minutes in this order, using a stirrer and deaerator ("Thinky Mixer", a product of THINKY Corporation), to prepare a slurry for positive electrode.

Then, the positive electrode slurry was uniformly coated on a current collector made of an aluminum foil, by a doctor blade method so that the film thickness after drying became 90 $\mu$m, followed by drying at 120°C for 20 minutes. Then, the film obtained was pressed by a roll press so that the electrode layer obtained had a density of 3.5 g/cm$^3$, whereby a positive electrode of lithium ion secondary battery was obtained.

(Production of counter electrode (PVdF type negative electrode)

First, in a biaxial planetary mixer (TK Hivis Mix 2P-03, a product of Primix Corporation) were placed 4 parts (in terms of solid content) of PVdF, 100 parts (in terms of solid content) of graphite as a negative electrode active material and 80 parts of NMP, followed by stirring at 60 rpm for 1 hour. Then, 20 parts of NMP was added. Then, using a stirrer and deaerator ("Thinky Mixer", a product of THINKY Corporation), stirring and mixing was conducted at 200 rpm for 2 minutes, at 1,800 rpm for 5 minutes and, under vacuum, at 1,800 rpm for 1.5 minutes in this order, to prepare a slurry for negative electrode.

Then, the negative electrode slurry was uniformly coated on a current collector made of a copper foil, by a doctor blade method so that the film thickness after drying became 150 $\mu$m, followed by drying at 120°C for 20 minutes. Then, the film obtained was pressed by a roll press so that the electrode layer obtained had a density of 1.8 g/cm$^3$, whereby a negative electrode of lithium ion secondary battery was obtained.

Next, the punched negative electrode of lithium ion secondary battery of 16.16 mm in diameter was placed on a double electrode-type coin cell ["HS Flat Cell" (trade name), a product of Hohsen Corp.] in a glove box. Then, on the negative electrode was placed a separator (trade name "Celgard #2400", a product of Celgard, LLC.) which was a punched polypropylene-made porous membrane of 18 mm in diameter. An electrolytic solution A was poured thereinto with a care being taken so as to prevent air penetration. Then, the punched positive electrode of lithium ion secondary battery of 15.95 mm in diameter was placed on the separator, and the exterior body of the double electrode-type coin cell was screwed up for sealing, to produce a lithium ion secondary battery (an electrochemical device).

The lithium ion secondary battery was evaluated for the number-average particle diameter, swelling rate to

electrolytic solution, peeling strength, rate property and low-temperature property, by the previously mentioned methods. The evaluation results are shown in Table 1; that is, the number-average particle diameter was 120 nm, the swelling rate to electrolytic solution was 150%, the peeling strength was 480 (mN/2 cm), the rate property was 88%, and the low-temperature property was 90%. Incidentally, Examples 15 to 17 and Comparative Examples 5 and 6 are each a case in which the electrode layer of lithium ion secondary battery positive electrode contained a polymer (A) satisfying the condition (1) or (2). In Tables 1 and 2, the results are indicated as "Evaluation for positive electrode of lithium ion secondary battery" at the parts labeled "Evaluation."

(Example 16 and Comparative Example 5)

150 mass parts of water was fed into a 7-liter (capacity) separable flask, and the flask inside was sufficiently purged with nitrogen. Meanwhile, in a separate vessel were placed 60 mass parts of water, 2 parts (in terms of solid content) of an ether sulfate type emulsifier (ADEKA REASOAP SR 1025, a product of ADEKA corporation) as an emulsifier, and the monomers shown in Table 1 and Table 2, of amounts (mass parts) shown in Table 1 and Table 2, followed by sufficient stirring, to obtain each monomer emulsion. The temperature of the flask inside was elevated; when it reached 60°C, 0.5 part of sodium persulfate as a polymerization initiator was added and, when it reached 75°C, the addition of the monomer emulsion was started. The monomer emulsion was added in 2 hours while the reaction temperature was being kept at 75°c, and a reaction was conducted at 85°C for 1 hour. The mixture was cooled to terminate the reaction, after which the mixture was adjusted to a pH of 7.5 using an aqueous sodium hydroxide solution, to obtain each binder composition.

Lithium ion secondary batteries were produced in the same manner as in Example 15 except that the binder compositions obtained above were used. Each lithium ion secondary battery was evaluated for the number-average particle diameter, swelling rate to electrolytic solution, peeling strength, rate property and low-temperature property, by the previously mentioned methods. The evaluation results are shown in Table 1 or Table 2.

(Comparative Example 6)

A binder composition was obtained in the same manner as in Example 1 except that each component shown in Table 1 and Table 2 was used in an amount (mass parts) shown in Table 1 and Table 2. Then, a lithium ion secondary battery was produced in the same manner as in Example 15 except that the binder composition was used. The lithium ion secondary battery was evaluated for the number-average particle diameter, swelling rate to electrolytic solution, peeling strength, rate property and low-temperature property, by the previously mentioned methods. The evaluation results are shown in Table 2.

(Example 17)

The inside of an about 6-liter (capacity) autoclave provided with an electromagnetic stirrer was sufficiently purged with nitrogen. Into the autoclave were fed 2.5 liters of oxygen-removed pure water and 25 g of ammonium perfluorodecanoate as an emulsifier. The temperature of the mixture was elevated to 60°C with stirring at 350 rpm. Thereinto was blown a mixed gas consisting of 44.2% of vinylidene fluoride (VdF) and 55.8% of propylene hexafluoride (HFP) until the autoclave inside pressure reached 20 $kg/cm^2$ G. Then, 25 g of a flon 113 solution containing 20 mass % of diisopropyl peroxycarbonate as a polymerization initiator was pressure-fed into the autoclave using a nitrogen gas, to initiate polymerization. During the polymerization, a mixed gas consisting of 60.2% of VDF and 39.8% of HFP was successively pressure-fed into the autoclave to keep the autoclave inside pressure at 20 $kg/cm^2$ G. Since the polymerization rate dropped with the progress of the polymerization, the polymerization initiator of the same amount as the above amount was pressure-fed, after the elapse of 3 hours, into the autoclave using a nitrogen gas, and the reaction was continued for another 3 hours. Then, the reaction mixture was cooled, the stirring was terminated, the unreacted monomers were released outside, and the reaction was terminated to obtain a fluoropolymer latex (seed particles).

150 parts of water and 10 parts (in terms of solid content) of the fluoropolymer latex were fed into a 7-liter (capacity) separable flask, and the flask inside was sufficiently purged with nitrogen. Meanwhile, in a separate vessel were placed 60 parts of water, 2 parts (in terms of solid content) of an ether sulfate type emulsifier (ADEKA REASOAP SR 1025, a product of ADEKA corporation) as an emulsifier, and the monomers shown in Table 1, followed by sufficient stirring, to produce a monomer emulsion. Then, the temperature of the flask inside was elevated; when it reached 60°C, 0.5 part of sodium persulfate as a polymerization initiator was added and, when it reached 75°C, the addition of the monomer emulsion was started. The monomer emulsion was added in 2 hours while the reaction temperature was being kept at 75°c, after which the temperature was elevated to 85°C and a reaction was conducted for 1 hour. After the reaction, the mixture was cooled to terminate the reaction, after which the mixture was adjusted to a pH of 7.5 using an aqueous sodium hydroxide solution, to obtain a binder composition.

A lithium ion secondary battery was produced in the same manner as in Example 15 except that the binder composition obtained above was used. The lithium ion secondary was evaluated for the number-average particle diameter, swelling rate to electrolytic solution, peeling strength, rate property and low-temperature property, by the previously mentioned methods. The evaluation results are shown in Table 1.

(Example 18)

[Evaluation of capacitor]

First, a binder composition was obtained in the same manner as in Example 1 except that each component shown in Table 3 was used in an amount (mass parts) shown in Table 3.

(Production of electrode for capacitor)

Next, in a biaxial planetary mixer (TK Hivis Mix 2P-03, a product of Primix Corporation) were placed 100 parts of active carbon "Kuraray Coal YP" (a product of Kuraray Chemical Co., Ltd.), 6 parts of conductive carbon "Denka Black" (a product of Denki Kagaku Kogyo Kabushiki Kaisha), 2 parts of a thickening agent "CMC 2200" (a product of Daicel corporation), and 278 parts of water, followed by stirring at 60 rpm for 1 hour. Then, 4 parts (in terms of solid content) of the binder composition obtained above was added, and stirring was conducted for another 1 hour to obtain a paste. Water was added to the paste to adjust the solid content of the paste to 25%. Then, using a stirrer and deaerator ("Thinky Mixer", a product of THINKY Corporation), stirring and mixing was conducted at 200 rpm for 2 minutes, at 1,800 rpm for 5 minutes and, under vacuum, at 1,800 rpm for 1.5 minutes in this order, to prepare a slurry for capacitor electrode.

Then, the slurry for capacitor electrode was uniformly coated on a current collector made of an aluminum foil, by a doctor blade method so that the film thickness after drying became 150 μm, to obtain a capacitor electrode.

The punched capacitor electrode of 16.16 mm in diameter was placed on a double electrode-type coin cell ["HS Flat Cell" (trade name), a product of Hohsen Corp.] in a glove box. Then, on the capacitor electrode was placed a cellulose-made separator (trade name "TF 45", a product of Nippon Kodoshi corporation) which was punched so as to have a diameter of 18 mm. An electrolytic solution B was poured thereinto with a care being taken so as to prevent air penetration. Then, a separate capacitor electrode punched in a diameter of 15.95 mm was placed on the separator, and the exterior body of the double electrode-type coin cell was screwed up for sealing, whereby a capacitor (an electrochemical device) was produced.

The capacitor was evaluated for the number-average particle diameter, swelling rate to electrolytic solution, peeling strength and capacitor cycle property by the above-mentioned methods. The evaluation results are shown in Table 2 or 3. Incidentally, Examples 18 to 22 and Comparative Examples 7 to 9 are each a case in which the electrode layer of capacitor electrode contained a binder containing a polymer (A) satisfying the condition (1) or (2). In Table 1 and Table 2, the results are indicated as "Evaluation for capacitor electrode" at the parts labeled "Evaluation."

Table 3

| | | Examples | | | | |
|---|---|---|---|---|---|---|
| | | 18 | 19 | 20 | 21 | 22 |
| Monomers | Butadiene (mass parts) | 37.5 | 37.5 | 37.5 | 37.5 | 46.0 |
| | Styrene (mass parts) | 44.5 | 39.5 | 34.5 | 21.0 | 44.5 |
| | Methyl methacrylate (mass parts) | 11.5 | 11.5 | 11.5 | 11.5 | 3.0 |
| | Acrylonitrile (mass parts) | - | 5.0 | 10.0 | 20.0 | - |
| | Butyl acrylate (mass parts) | - | - | - | - | - |
| | 2-Ethylhexyl acrylate (mass parts) | - | - | - | - | - |
| | Acrylic acid (mass parts) | 1.0 | 1.0 | 1.0 | 1.0 | 1.0 |
| | Itaconic acid (mass parts) | 3.0 | 3.0 | 3.0 | 3.0 | 3.0 |
| | Acrylamide (mass parts) | - | - | - | - | - |
| | Methacrylamide (mass parts) | 2.5 | 2.5 | 2.5 | 6.0 | 2.5 |
| | N-isopropylacrylamide (mass parts) | - | - | - | - | - |

(continued)

| | | Examples | | | | |
|---|---|---|---|---|---|---|
| | | 18 | 19 | 20 | 21 | 22 |
| Chain transfer agents | α-methylstyrene dimer (mass parts) | 0.50 | 0.50 | 0.50 | 0.50 | 0.50 |
| | Dodecylmercaptan (mass parts) | 0.25 | 0.25 | 0.25 | 0.25 | 0.25 |
| Seed particles | Fluoropolymer latex (mass parts) | - | - | - | - | - |
| Number-average particle diameter [nm] | | 120 | 120 | 120 | 120 | 120 |
| Swelling rate to electrolytic solution A [%] | | - | - | - | - | - |
| Swelling rate to electrolytic solution B [%] | | 150 | 170 | 220 | 250 | 120 |
| Evaluation | | Evaluation for capacitor electrode | | | | |
| Peeling strength [mN/2 cm] | | 230 | 210 | 210 | 200 | 250 |
| Rate property (1.0 C/0.2 C) [%] | | - | - | - | - | - |
| Low-temperature property (0°C) [%] | | - | - | - | - | - |
| Capacitor cycle property [%] | | 90 | 94 | 94 | 93 | 88 |

(Examples 19 to 22 and Comparative Examples 7 to 9)

Binder compositions were obtained in the same manner as in Example 1 except that the components shown in Table 2 or Table 3 were used in amounts (mass parts) shown in Table 2 or Table 3. Then, capacitors were produced in the same manner as in Example 18 except that the above binder compositions were used. Each capacitor was evaluated for the number-average particle diameter, swelling rate to electrolytic solution, peeling strength and capacitor cycle property. The evaluation results are shown in Table 2 or Table 3.

It could be confirmed from Table 1 to Table 3 that the electrochemical devices of Examples 1 to 22 were superior in charge-discharge property as compared with the electrochemical devices of Comparative Examples 1 to 9.

In Examples 6 and 7, the swelling rate is in a range of 200 to 350% (a more preferred range) (210% and 320%) and accordingly the rate property and the low-temperature property are particularly good. Incidentally, in Examples 6 and 7, the content of acrylonitrile used as a raw material, i.e. the content of the constituent unit derived from acrylonitrile is appropriate and it gives the above swelling rate.

INDUSTRAIL APPLICABILITY

The electrochemical device of the present invention can be suitably used, for example, as an electric source for driving an electronic apparatus. The binder composition of the present invention is suitable as a material for the electrode constituting an electrochemical device used, for example, as an electric source for driving an electronic apparatus.

## Claims

**1.** An electrochemical device having a positive electrode and a negative electrode forming a pair with the positive electrode, wherein
at least either of the positive electrode and the negative electrode has a sheet-like current collector and an electrode layer provided at least at one side of the current collector,
the electrode layer has an electrode active material and a binder which bonds and fixes powders of the electrode active material each other and further the electrode active material and the current collector, and
the binder contains, as a component, a polymer (A) having a constituent unit (a1) derived from an amide group-containing monomer and a constituent unit (a2) derived from (meth)acrylic acid, the polymer (A) satisfying the following condition (1) or (2).

(1) The polymer (A) has a swelling rate of 120 to 600% when immersed, for 24 hours at 80°C, in a solution (i) obtained by dissolving lithium hexafluorophosphate at a concentration of 1 mol/liter in a solvent consisting of

ethylene carbonate, diethyl carbonate and ethyl methyl carbonate (the volume fraction thereof is 1:1:1) and controlled at 80°C.
(2) The polymer (A) has a swelling rate of 110 to 300% when immersed, for 24 hours at 80°C, in a solution (ii) obtained by dissolving methyl triethyl ammonium tetrafluoroborate in propylene carbonate so that the concentration of methyl triethyl ammonium tetrafluoroborate becomes 1 mol/liter and controlled at 80°C.

**2.** An electrochemical device according to Claim 1, wherein the polymer (A) as a component of the binder contains the constituent unit (a1) derived from an amide group-containing monomer in an amount of 1 to 10 mass % relative to the total constituent units of the polymer (A).

**3.** An electrochemical device according to Claim 1 or 2, wherein the polymer (A) as a component of the binder contains the constituent unit (a2) derived from (meth)acrylic acid in an amount of 0.3 to 5 mass % relative to the total constituent units of the polymer (A).

**4.** An electrochemical device having a positive electrode and a negative electrode forming a pair with the positive electrode, wherein
at least either of the positive electrode and the negative electrode has a sheet-like current collector and an electrode layer provided at least at one side of the current collector,
the electrode layer has an electrode active material and a binder which bonds and fixes powders of the electrode active material each other and further the electrode active material and the current collector, and
the binder contains, as a component, a polymer (A) containing a constituent unit (a1) derived from an amide group-containing monomer, in an amount of 1 to 10 mass % relative to the total constituent units of the polymer (A) and a constituent unit (a2) derived from (meth)acrylic acid in an amount of 0.3 to 5 mass % relative to the total constituent units of the polymer (A).

**5.** An electrochemical device according to any one of Claims 1 to 4, wherein the constituent unit (a1) derived from an amide group-containing monomer is derived from a monomer represented by the following general formula (1).

[Formula 1]

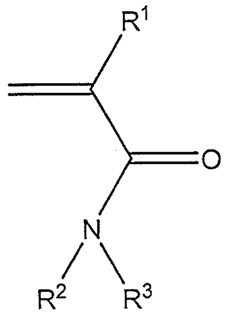

(1)

(In the general formula (1), $R^1$ is a hydrogen atom or a methyl group; and $R^2$ and $R^3$ are each independently a hydrogen atom or an unsubstituted or substituted hydrocarbon group of 1 to 10 carbon atoms.)

**6.** An electrochemical device according to Claim 5, wherein $R^1$ of the general formula (1) is a methyl group.

**7.** An electrochemical device according to any one of Claims 1 to 6, wherein the polymer (A) as a component of the binder further contains a constituent unit (a3) derived from a conjugated diene, in an amount of 20 to 60 mass % relative to the total constituent units of the polymer (A).

**8.** An electrochemical device according to any one of Claims 1 to 7, wherein the polymer (A) as a component of the binder is obtained by polymerizing a polymer raw material containing an amide group-containing monomer and (meth)acrylic acid, in the presence of a chain transfer agent of 0.3 to 4 mass parts relative to the total amount (100 mass parts) of the polymer raw material.

**9.** A binder composition containing

(A) a polymer having a constituent unit (a1) derived from an amide group-containing monomer and a constituent unit (a2) derived from (meth)acrylic acid, and
(B) a dispersing medium,

wherein the polymer (A) satisfies the following condition (1) or (2) .

(1) The polymer (A) has a swelling rate of 120 to 600% when immersed, for 24 hours at 80°C, in a solution (i) obtained by dissolving lithium hexafluorophosphate at a concentration of 1 mol/liter in a solvent consisting of ethylene carbonate, diethyl carbonate and ethyl methyl carbonate (the volume fraction thereof is 1:1:1) and controlled at 80°C.
(2) The polymer (A) has a swelling rate of 110 to 300% when immersed, for 24 hours at 80°C, in a solution (ii) obtained by dissolving methyl triethyl ammonium tetrafluoroborate in propylene carbonate so that the concentration of methyl triethyl ammonium tetrafluoroborate becomes 1 mol/liter and controlled at 80°C.

**10.** A binder composition according to Claim 9, wherein the polymer (A) contains the constituent unit (a1) derived from an amide group-containing monomer in an amount of 1 to 10 mass % relative to the total constituent units of the polymer (A) .

**11.** A binder composition according to Claim 9 or 10, wherein the polymer (A) contains the constituent unit (a2) derived from (meth)acrylic acid in an amount of 0.3 to 5 mass % relative to the total constituent units of the polymer (A) .

**12.** A binder composition containing

(A) a polymer containing a constituent unit (a1) derived from an amide group-containing monomer in an amount of 1 to 10 mass % relative to the total constituent units (100 mass %) of the polymer (A) and a constituent unit (a2) derived from (meth)acrylic acid in an amount of 0.3 to 5 mass % relative to the total constituent units (100 mass %) of the polymer (A), and
(B) a dispersing medium.

**INTERNATIONAL SEARCH REPORT**

International application No.
PCT/JP2010/063420

A. CLASSIFICATION OF SUBJECT MATTER
*H01M4/62*(2006.01)i, *H01G9/058*(2006.01)i

According to International Patent Classification (IPC) or to both national classification and IPC

B. FIELDS SEARCHED

Minimum documentation searched (classification system followed by classification symbols)
H01M4/62, H01G9/058

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-537841 A (LG Chem, Ltd.), 25 September 2008 (25.09.2008), claims; overall of "Detailed Explanation of the Invention" & US 2006/0257739 A1 & WO 2006/107173 A1 | 1-12 |
| A | JP 2002-353074 A (Showa Denko Kabushiki Kaisha), 06 December 2002 (06.12.2002), claims; overall of "Detailed Explanation of the Invention" (Family: none) | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 October, 2010 (13.10.10) | 26 October, 2010 (26.10.10) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2010/063420

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-287570 A (Iwate University), 01 November 2007 (01.11.2007), claims; overall of "Detailed Explanation of the Invention" (Family: none) | 1-12 |
| A | JP 2002-260665 A (Asahi Kasei Corp.), 13 September 2002 (13.09.2002), claims; overall of "Detailed Explanation of the Invention" (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11025989 A